Europäisches Patentamt

European Patent Office

Office européen des brevets

(11) Veröffentlichungsnummer: **0 249 047 B1**

# EUROPÄISCHE PATENTSCHRIFT

(45) Veröffentlichungstag der Patentschrift: **29.01.92**

(21) Anmeldenummer: **87107007.4**

(22) Anmeldetag: **14.05.87**

(51) Int. Cl.⁵: **B65D 90/00**, B08B 9/08, B29B 17/02

(54) **Vorrichtung zum Abkühlen von gummierten Grossbehältern mit flüssigem Stickstoff.**

(30) Priorität: **12.06.86 DE 3619788**

(43) Veröffentlichungstag der Anmeldung:
**16.12.87 Patentblatt 87/51**

(45) Bekanntmachung des Hinweises auf die
Patenterteilung:
**29.01.92 Patentblatt 92/05**

(84) Benannte Vertragsstaaten:
**AT BE CH FR GB IT LI NL SE**

(56) Entgegenhaltungen:
**DE-A- 2 525 951**
**DE-C- 833 047**
**GB-A- 1 452 082**
**US-A- 3 196 774**

(73) Patentinhaber: **MESSER GRIESHEIM GMBH**
**Hanauer Landstrasse 330**
**W-6000 Frankfurt/Main(DE)**

(72) Erfinder: **Marx, Bodo**
**Mühlenstrasse 4**
**W-4156 Willich 1(DE)**
Erfinder: **Busse, Jürgen**
**Elbestrasse 24**
**W-4050 Mönchengladbach 3(DE)**

EP 0 249 047 B1

# Beschreibung

Die Erfindung betrifft eine Vorrichtung zum Abkühlen von gummierten Großbehältern mit flüssigem Stickstoff zwecks Versprödung und Abtragung der Gummierung nach Anspruch 1.

Zahlreiche Behälter der chemischen Industrie sind mit einer Gummierung ausgekleidet, um chemischen, thermischen oder mechanischen Beschädigungen entgegenzuwirken. Diese Gummierungen verschleißen mit der Zeit und müssen abgetragen und durch neue Gummierungen ersetzt werden. Das Abtragen der Gummierung kann mit Hilfe chemischer Lösungsmittel, durch Abbrennen oder durch rein manuelle Entfernung erfolgen. Diese Verfahren sind zeitaufwendig, kostenintensiv und teilweise umweltbelastend. Beim Abbrennen der Gummierung kann es auch zu Gefügeänderungen des Behälterwerkstoffes kommen. Man hat daher versucht, die Gummierung durch Eindüsen von flüssigem Stickstoff zu verspröden. Hierzu bringt man eine oder mehrere mit Düsen versehene Ringleitungen im Innern des Behälters an und sprüht durch die Düsen flüssigen Stickstoff in das Behälterinnere. Unter dem Einfluß der Kälte des verdampfenden Stickstoffes schrumpfen die Behälterwand, in der Regel aus Stahl, und die Behältergummierung. Wegen der unterschiedlichen Wärmeausdehnungskoeffizienten von Gummi und Stahl treten im Verbund Scherkräfte auf, die zu Beginn des Einkühlprozesses durch das elastische Verhalten der Gummierung kompensiert werden. Beim weiteren Einsprühen von flüssigem Stickstoff werden schließlich tiefe Temperaturen erreicht, nämlich -100 °C bis -150 °C, bei welchen die Gummierungen völlig aushärten und spröde werden. Sie können dann die immer größer werdenden Scherkräfte nicht mehr durch Formänderung kompensieren. Es kommt schließlich zur Zerstörung des Verbundes ohne daß äußere mechanische Kräfte auf ihn eingewirkt haben. Der vom Untergrund abgesprengte Gummi kann, nachdem der Behälter wieder Umgebungstemperatur angenommen hat und die Sauerstoffkonzentration im Behälter ein Begehen zuläßt, mit geringem Aufwand entfernt werden.

Diese Methode zum Entgummieren funktioniert bei kleinen Behältern recht gut. Bei Großbehältern sind jedoch hierbei schon Materialschäden verursacht worden. Diese entstehen durch das ungleichmäßige Einkühlen der großen Behälter. Bei großen Behältern fällt wegen seiner größeren spezifischen Dichte kaltes Gas in den unteren Behälterbereich. Nach oben hin wird die Temperatur des verdampften Stickstoffs im Behälter immer höher. Dadurch stellt sich über die Höhe des Behälters ein unerwünschter Temperaturgradient ein, aus dem zusätzlich Spannungen im Behälteraufbau resultieren.

Diese zusätzlichen Spannungen sind an sich gering und könnten vom Behälterwerkstoff ohne weiteres aufgenommen werden. Im Zusammenwirken mit weiteren Spannungen können sich aber unzulässige Belastungen des Behälterwerkstoffes ergeben. Diese weiteren Spannungen sind Eigenspannungen bekannter Größe und Wirkrichtung sowie zusätzliche Spannungen aus der Abkühlgeschwindigkeit. Hierzu kommen nun die zusätzlichen Spannungen durch ein inhomogenes Temperaturfeld beim Abkühlen und schließlich auch im abgekühlten stationären Zustand. Unter ungünstigen Bedingungen können hieraus Spannungen resultieren, die den Behälter schädigen oder sogar zerstören. Hierbei ist auch zu bedenken, daß viele Behälterwerkstoffe, z.B. ferritischer Stahl, bei tiefen Temperaturen eine nur noch geringe Kerbschlagzähigkeit aufweisen. Aus diesen Gründen ist man wieder davon abgegangen, Großbehälter durch Eindüsen von flüssigem Stickstoff zu entgummieren.

Der Erfindung liegt daher die Aufgabe zugrunde, eine Vorrichtung zu schaffen, die es ermöglicht, auch große Behälter durch Beaufschlagen mit flüssigem Stickstoff zu entgummieren, ohne daß zusätzliche Spannungen entstehen können, die zu einer Schädigung des Behältermaterials führen würden.

Diese Aufgabe ist erfindungsgemäß gelöst mit den im Anspruch 1 angegebenen Merkmalen. Vorteilhafte Weiterbildungen der Erfindung sind in den Unteransprüchen angegeben.

Mit der erfindungsgemäßen Vorrichtung wird somit flüssiger Stickstoff in bekannter Weise über ein Düsensystem in den zu entgummierenden Behälter eingetragen. Hier entzieht der Stickstoff dem Behälter und der Gummierung Wärme, verdampft und strömt über einen Abgasstutzen ins Freie.

Wesentlich für die erfindungsgemäße Vorrichtung ist jedoch, daß mit ihr der flüssige Stickstoff nicht willkürlich über das Düsensystem eingesprüht wird, sondern so kontrolliert, daß sich ein homogenes Temperaturfeld aufbauen kann. Hierzu dient die von der erfindungsgemäßen Vorrichtung bewirkte Kaltgasumwälzung. Das kälteste Stickstoffgas aus dem Behälterboden wird mittels der Leitung durch den Ventilator abgesaugt und in den oberen Teil des Behälters gefördert, wo die Temperatur des Stickstoffs an sich höher ist. Wenn zusätzlich die Abkühlgeschwindigkeit gering gehalten wird, vorzugsweise zwischen 10 und 20 K/h, bildet sich ein außerordentlich homogenes Temperaturfeld über die Höhe des einzukühlenden Behälters aus. Die thermischen Spannungen, die aus der Temperaturänderung resultieren und die Eigenspannungen überlagern, bleiben daher vernachlässigbar klein und treten gleichmäßig verteilt in der Behälterwand auf.

Die Maßnahme, mittels einer Gasumwälzung unter Verwendung einer axial angeordneten Leitung und eines Ventilators den Inhalt eines Behälters zu homogenisieren, ist an sich bekannt. So zeigt beispielsweise die US-A 3 196 774 einen gasdichten Getreidesilo, bei dem durch ein axial angeordnetes Rohr und einen am oberen Ende des Rohres befindlichen Ventilator die Luft ständig durch das Getreide umgewälzt wird. Hierdurch wird die Feuchtigkeit und Temperatur des Getreides homogenisiert. Nester erhöhter Temperatur, die zu Silobränden führen können, können sich nicht ausbilden.

Mit der erfindungsgemäßen Vorrichtung ist es möglich, auch Behälter aus Werkstoffen durch Abkühlen mit flüssigem Stickstoff zu entgummieren, die bei tiefen Temperaturen nur noch eine geringe Kerbschlagzähigkeit aufweisen. Die mit Hilfe der erfindungsgemäßen Vorrichtung mögliche kontrollierte Abkühlung unter Ausbildung eines homogenen Temperaturfeldes über die Behälterhöhe verursacht weder permanente Gefügeänderungen in ferritischem oder austhenitischen Stahl noch bewirkt sie Änderungen der mechanischen Festigkeitswerte.

Die Leitung und der zugehörige Ventilator können an sich beliebig gestaltet sein. Der Ventilator kann auch an beliebiger Stelle der Leitung angeordnet werden. Vorteilhaft ist es jedoch, wenn der Ventilator als ein am oberen Teil der Leitung angeordnetes Käfiglaufrad ausgebildet ist, welches das angesaugte kalte Gas aus dem Behälterboden radial in den oberen Teil des Behälters ausstößt. Diese radiale Strömungsrichtung kann jedoch auch durch Umlenkeinrichtungen bewirkt werden. Wenn der Ventilator am oberen Teil der Leitung angeordnet wird, kann seine Verbindung zum Antrieb kurz gehalten werden. Der Antrieb selbst liegt zweckmäßigerweise außerhalb des Behälters. Die Leitung wird zweckmäßigerweise als Rohr ausgebildet. Um den Einsatz der Vorrichtung in verschieden großen Behältern zu ermöglichen, wird das Rohr zweckmäßigerweise längenverstellbar ausgebildet. Dies kann durch zwei teleskopartig ineinanderschiebbare Einzelrohre erreicht werden.

Als Leitung kann jedoch auch ein Schlauch verwendet werden. Bei Verwendung eines Wellschlauches ergeben sich ebenfalls sehr einfache Möglichkeiten zur Längenverstellung der Leitung.

Bei sehr großen Behältern können auch mehrere mit Ventilatoren bestückte Leitungen parallel eingesetzt werden. Der Aufwand zur Montage der erfindungsgemäßen Vorrichtung ist denkbar gering. Auch der Einsatz im Exbereich und bei sehr tiefen Temperaturen, d.h. unter -180 °C, ist ohne weiteres möglich. Mit der erfindungsgemäßen Vorrichtung kann die umweltfreundliche kryogene Entgummierung auch bei Großbehältern durchgeführt werden, ohne daß Werkstoffschäden entstehen können.

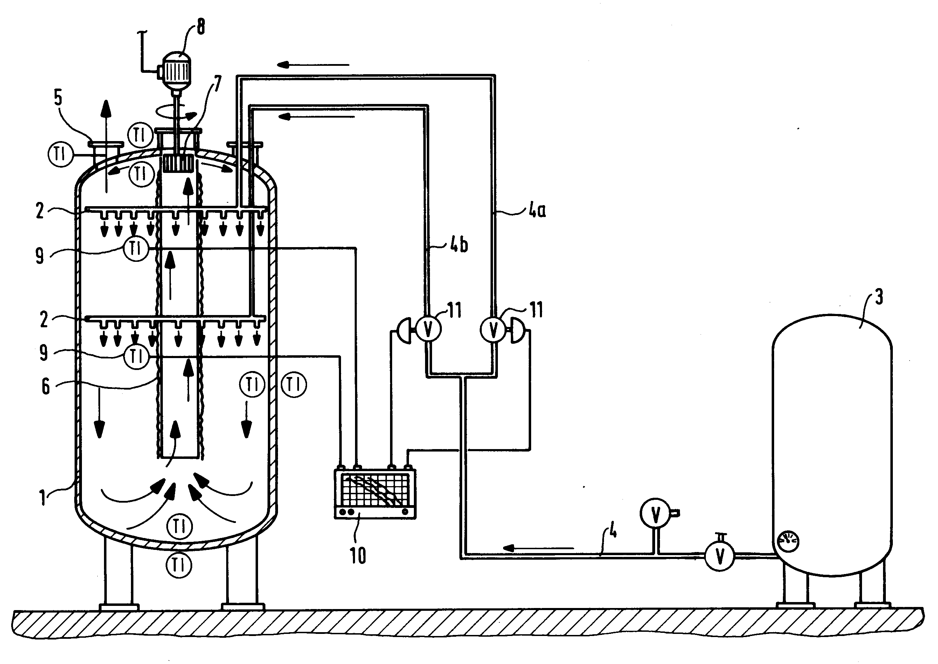

Die Zeichnung veranschaulicht ein Ausführungsbeispiel der Erfindung in schematischer Form.

Dargestellt ist ein Großbehälter 1, dessen Gummierung durch Beaufschlagung mit flüssigem Stickstoff versprödet und abgesprengt werden soll. Der flüssige Stickstoff wird über zwei mit Düsen versehene Ringleitungen 2 in das Behälterinnere versprüht. Der flüssige Stickstoff wird einem Standtank 3 entnommen und gelangt durch die Leitungen 4, 4a und 4b in die Ringleitungen 2. Das verdampfte Stickstoffgas entweicht durch den Abgasstutzen 5 ins Freie. Erfindungsgemäß ist in axialer Richtung im Behälter ein Wellschlauch 6 angeordnet, der sich bis in den Bodenbereich des Großbehälters 1 erstreckt. Am oberen Teil des Wellschlauches 6 ist ein als Käfiglaufrad ausgebildeter Ventilator 7 angeordnet, dessen elektrischer Antrieb 8 sich außerhalb des Großbehälters 1 befindet. Der Ventilator 7 saugt das kalte Stickstoffgas aus dem Boden des Behälters durch den Wellschlauch 6 in den oberen Teil des Großbehälters 1. Hier tritt das angesaugte Gas in radialer Richtung aus. Die Strömungsrichtungen sind durch nicht näher bezeichnete Pfeile dargestellt. Der verdampfte Stickstoff wird deshalb ständig im Großbehälter 1 umgewälzt, und zwar in der Weise, daß Stickstoff aus dem kältesten Teil des Behälters in den wärmsten Teil gefördert wird. Ein der eingedüsten Menge flüssigen Stickstoffs entsprechende Menge gasförmigen Stickstoffs entweicht ständig durch den Abgasstutzen 5.

Die Kaltgasumwälzung bewirkt an sich schon die Ausbildung eines sehr homogenen Temperaturfeldes über die Höhe des Großbehälters 1. Zusätzlich wird noch die Abkühlgeschwindigkeit gering gehalten. Diese wird durch zahlreiche Temperaturmeßstellen 9 kontrolliert, indem mit Hilfe einer Temperaturmeß- und Regeleinheit 10 der flüssige Stickstoff durch die Magnetventile 11 in den Leitungen 4a und 4b den Erfordernissen entsprechend in die Ringleitungen 2 dosiert wird. Anstelle des Wellschlauches 6 kann selbstverständlich auch ein starres Rohr eingesetzt werden.

**Patentansprüche**

1. Vorrichtung zum Abkühlen von gummierten Großbehältern (1) mit flüssigem Stickstoff zwecks Versprödung und Abtragung der Gummierung mit mindestens einer mit Düsen versehenen Ringleitung (2) zum Einbringen des flüssigen Stickstoffs in das Behälterinnere und wenigstens einer in axialer Richtung angeordneten, sich vom oberen Teil des Behälters bis in dessen Bodenbereich erstreckenden Leitung (6), der ein Ventilator (7) zugeordnet ist, um eine Umwälzung von verdampftem Stickstoff aus dem unteren Teil des Behälters durch die Leitung in den oberen Teil des Behälters zu bewirken.

2. Vorrichtung nach Anspruch 1,
bei der
die Leitung als Rohr ausgebildet ist.

3. Vorrichtung nach Anspruch 2,
bei der
das Rohr längenverstellbar durch teleskopartig ineinanderschiebbare Einzelrohre ausgebildet ist.

4. Vorrichtung nach einem der Ansprüche 1 bis 3,
bei der
der Ventilator aus einem am oberen Teil der Leitung angeordneten Käfiglaufrad mit außenliegendem Antrieb (8) besteht.

**Claims**

1. Device for cooling rubberized large containers (1) with liquid nitrogen in order to embrittle and strip away the rubberizing, with at least one circular line (2) provided with nozzles for introducing the liquid nitrogen into the inside of the container, and at least one line (6) which is located in an axial direction and extends from the upper part of the container down to its base region and to which is assigned a fan (7) to circulate evaporated nitrogen from the lower part of the container through the line into the upper part of the container.

2. Device according to Claim 1, in which the line is formed as a tube.

3. Device according to Claim 2, in which the tube is formed so that it is adjustable lengthwise by individual tubes which can be pushed inside one another telescopically.

4. Device according to one of Claims 1 to 3, in which the fan consists of a cage impeller, located in the upper part of the line, with external drive (8).

**Revendications**

1. Dispositif pour refroidir des réservoir de grande dimension (1) revêtus de caoutchouc, avec de l'azote liquide pour rendre cassant le revêtement de caoutchouc et en assurer l'enlèvement, avec au moins une conduite annulaire (2) munie de buses pour introduite l'azote liquide à l'intérieur du réservoir et au moins une conduite (6) prévue dans la direction axiale et qui s'étend de la partie supérieure du réservoir jusqu'à la zone de fond de celui-ci, un ventilateur (7)) étant associé à cette conduite, pour assurer une circulation de l'azote vaporisé de la partie inférieure du réservoir à travers la conduite jusque dans la partie supérieure du réservoir.

2. Dispositif selon la revendication 1, caractérisé en ce que la conduite est un tuyau.

3. Dispositif selon la revendication 2, caractérisé en ce que le tuyau est réglable en longueur en étant constitué de tuyaux distincts coulissants télescopiquement l'un dans l'autre.

4. Dispositif selon l'une des revendications 1 à 3, caractérisé en ce que le ventilateur se compose d'un rotor en cage d'écureuil prévu dans la partie supérieure de la conduite est muni d'un moteur (8) situé à l'extérieur.